# EUROPEAN PATENT SPECIFICATION

(11) **EP 3 925 939 B1**
(45) Date of publication and mention of the grant of the patent: **09.10.2024**
(21) Application number: 20180547.0
(22) Date of filing: 17.06.2020
(51) Int. Cl.: C03C 21/00, C03B 1/00, C03C 23/00

(54) **METHOD OF MANUFACTURING GLASS PRODUCTS AND ARRANGEMENT**
VERFAHREN ZUR HERSTELLUNG VON GLASPRODUKTEN UND ANORDNUNG
PROCÉDÉ DE FABRICATION DE PRODUITS EN VERRE ET AGENCEMENT

(43) Date of publication of application: 22.12.2021
(73) Proprietor: Fiskars Finland Oy Ab, 02150 Espoo (FI)
(72) Inventor: Aromaa, Mikko, 02150 Espoo (FI)
(74) Representative: Kolster Oy Ab

(56) References cited:
- EP-A1- 2 371 779
- CN-A- 110 357 455
- US-A- 3 489 546
- US-A1- 2004 166 173

## Description

### FIELD OF THE INVENTION

The present invention relates to an arrangement and method of manufacturing a glass product, and more particularly to an antimicrobial glass product.

### BACKGROUND OF THE INVENTION

The conventional glass manufacturing process comprises of forming a glass object of molten glass, flame-polishing the glass object for smooth surface, and followed by annealing the glass object at 300-700 °C for 1-12 hours to prevent internal stress formation due to uncontrolled cooling of surface and bulk before cooling to room temperature. The internal stress inside the glass object can be relieved even with a small vibration or hit of the object causing shattering or in case of small stress fracturing.

The anti-microbial effects of metals such as silver (Ag), gold, (Au), copper (Cu) and zinc (Zn) are well known for instance in medical instrument industry as they kill microorganisms or stop their growth. Most conventional antimicrobial glass has an antimicrobial layer of metal on the glass surface. Several methods are used to form this layer such as by adding metal compounds to the raw materials for forming the glass, coating the finished non-antimicrobial glass product with metal, or adding metal to an ion exchange bath. This is followed by another annealing step and removing excessive metal from the surface.

Because some of the metals are relatively expensive, the most cost-efficient and more permanent way to form the antimicrobial layer is by ion exchange. Conventional ion exchange processes are used to chemically strengthen the annealed glass objects and typically involve submerging the glass object in a molten salt containing ions having a larger ionic radius than ions present in the glass that are prone to the exchange reaction, such that the smaller ions present in the glass are replaced by larger ions from the molten salt solution.

Some of the disadvantages associated with the metal salt bath are relatively long submerging time and characteristic colour to the metal which appears to the human eye, such as for instance, yellow for silver. The conventional ion exchange process may take 30 mins to several hours to obtain the requisite antimicrobial layer. If the concentration of the metal ions is lowered, the antimicrobial properties will also decrease. The yellow/amber hue of the silver is caused by the absorption of visible light except for yellow wavelengths, and this is not desirable feature in a transparent product, for instance.

Another disadvantage relating to the ion exchange is that it is a separate process, which requires additional time, space and workload. In some instances, the glass object is heated to below the glass transition temperature for actuating the ion exchange on the glass object. When submerging 3D products, size of the ion exchange bath is a determinant factor. The bigger the salt bath, the more salt and more energy is required. For some 3D product, such as a bowl, it's necessary to consider the flow of the salt bath and filling whole inner surface of the bowl. The glass product can be so big that only one product is submerged at a time. Considering the usual time for the submerge, the ion exchange process for a whole batch of bowls can be extremely time and energy consuming.

EP 2 371 779 A1, US 2004/166173 A1, US 3 489 546 A and CN 110 357 455 A disclose methods of manufacturing glass products comprising a step of applying an antimicrobial fluid.

### BRIEF DESCRIPTION OF THE INVENTION

An object of the present invention is to provide a method and arrangement to overcome the above disadvantages. The objects of the invention are achieved by a method and arrangement which are characterized by what are stated in the independent claims. The preferred embodiments of the invention are disclosed in the dependent claims.

The invention is based on the idea of applying fluid comprising metal with antimicrobial properties onto the surface of a glass objects during the manufacturing process, and especially after the forming step and before the annealing step so that the ion-exchange will take place during the annealing which will shorten the total manufacturing time and prevent of the characteristic colour of the metal to be visible.

### BRIEF DESCRIPTION OF THE DRAWINGS

In the following the invention will be described in greater detail by means of preferred embodiments with reference to the attached drawings, in which
Figure 1 illustrates a flow diagram of a method for manufacturing a glass product according to some embodiments;
Figure 2 illustrates a schematic view of an arrangement according to one embodiment; and
Figure 3 illustrates a schematic view of an arrangement according to another embodiment.

### DETAILED DESCRIPTION OF THE INVENTION

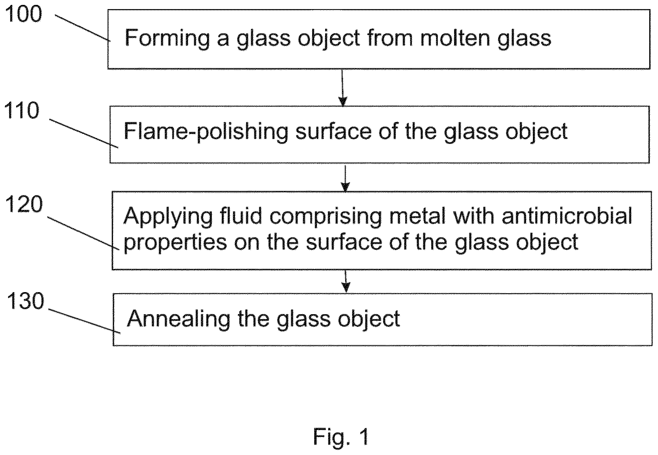

Figure 1 illustrates a flow diagram of a method for manufacturing a glass product according to some embodiments. The method of this invention relates to manufacturing an antimicrobial glass product directly from molten glass without adding antimicrobial material in the molten glass raw materials or without an additional post-processing step of ion exchange of an annealed object. The most common used raw materials for soda-lime glass are silicon dioxide (SiO₂), calcium oxide (CaO) and sodium oxide (Na₂O), for instance, which are fed into a glass-melting furnace.

The present invention relates to manufacturing glass, wherein it comprises a forming step 100 to form a glass object from molten glass which is 1000-1500 °C depending on its composition. For example, for tableware, a preferred temperature is 1000-1200 °C. During the forming step 100, the molten glass is placed into a mould where the glass object takes an initial shape by pressing or blowing or both. The form giving step can be either machine made, or handmade or combination of both. The glass is given its shape and the object reaches a temperature where the viscosity of the glass prevents the flow of the glass by gravity to large extent anymore. Followed by further cooling of the object after coming out of the mould. In some implementations, the mould is not needed, and the shape is acquired by gathering the molten glass onto a blowpipe and moulded manually.

In some embodiments, the forming step 100 is followed by a flame-polishing step 110, where the surface of the glass object is smoothed and polished while removing visible marks after the forming. Temperature of the glass object before polishing should be generally as high as possible but without destroying the shape of the glass object by allowing the viscosity change too much. Polishing is done with as effective flame as possible to introduce enough energy onto the surface to re-melt it and smoothen the surface. However, this step may not be necessary when there is no need for a polished surface.

After the flame-polishing step 110 or the forming step 100 is followed by an applying step 120, wherein a fluid comprising metal with antimicrobial properties is applied on the glass object having a surface temperature of 500-950 °C. In this temperature range, the glass object is still soft and receptive to surface treatment. The applying step may last less than 200 seconds, or in some embodiments even less than 30 seconds, and can be implemented by spraying on the surface of the glass object, submerging the glass object into a bath or other applying technique where the fluid is deposited at least partly on the surface of the glass object. The applying time refers to the time the fluid is actively deposited on the surface of the glass object. The fluid deposited on the surface may have a very small droplet size such that solvent is evaporated on the way from the nozzle because of high volatility of the solvent at the ambient temperature boosted by the specific surface area of the droplet and only metal or metal compound contacts the surface. This is preferable because no extra energy is transferred from the hot surface to evaporate the liquid which causes the surface to cool down faster.

In some embodiments, the applying step 120 can be combined with the flame-polishing step 110 where the oxidising or reducing agent further comprises metal particles or metal salts which are deposited on the surface of the glass object. This step can be carried out immediately after the forming step 100.

The spraying can be implemented by at least one nozzle and the system can be customized according to the desired product shape. In this context "spraying" refers to producing small droplets or particles containing the solvent and the dissolved metal compound in a form of spray, sprinkle, mist, haze, jet or similar and depositing said metal compound onto the surface of the object. The system parameters can be designed including spray characterization, droplet size distribution, spray impact, spray pattern, spray coverage and spray angle. The residence time of the particles before deposited onto the surface can be so long, but is not limited to, that all the solvent evaporates from the droplets.

The droplet size in the mist from the atomizer is one of the key parameters in order to obtain the right sized particles to perform ion exchange in a right manner to have the desired effect in the end. That is to avoid too rapid ion exchange which leads to metals diffusing in the bulk of glass matrix and on the other hand to avoid the coloring effect of the metals, the cooling effect of too large particles and the lack of material with too small particle size and concentration combination. There are several types of nozzles of which gas assisted sprays in general produce a smaller droplet size than the ones that use only the pressure of the liquid as atomizing. Both types give initial velocity to the droplets as opposed to ultrasonic sprays which tend to generate droplets without sufficient motion energy if not assisted with external acceleration. The mean of the particle size distribution from the liquid pressure operated nozzles can be shifted towards smaller particle sizes by increasing the pressure. Whereas, the gas assisted nozzles spray smaller droplets when increasing the velocity difference of the liquid and gas, that is increasing the gas pressure is the dominant factor with a given orifice size. And additionally, the smaller the liquid feed orifice, in general, the smaller the particle size.

The design of the spray nozzle can affect the spray pattern type. There are several spray pattern types such as flat fan, full cone, hollow cone, spiral full cone, solid stream and mist, and this will affect the droplet size, but even staying within a pattern type there may be variation on levels of atomisation. For example, the best pattern suitable for a tumbler is the flat fan which covers the whole side when the tumbler rotates around its axis and one nozzle can cover the whole circumference. For a rotating plate, the full cone pattern provides the best coverage.

In one embodiment, the droplet size may range from 10 nm to 1000 µm and disperse into smaller droplets such as 10 nm to 10 µm, when the droplet is deposited onto the surface of the glass object. The nozzle can spray the fluid at a flow rate of 0,1 to 10 l/h depending on the nozzle type and size. For example, for non-heated fluid the flow rate can be 1 l/h, and for heated fluid the flow rate may decrease while the concentration increases. The fluid can be heated below its boiling temperature which depends on the composition. The spraying time is preferably 5-60 seconds to obtain the desired coverage of the object, but in some embodiments even 5-30 seconds is enough.

There are different techniques to produce a spray. Two most used techniques are a pressurized system and an ultrasonic vaporizer. The pressurized system can be a gas-assisted atomizer, which uses its special design and pressurized air or gas to atomize the liquid and break it into tiny droplets. The ultrasonic vaporizer can be an ultrasonic atomizer which uses the energy of high-speed impact to produce a high-frequency oscillation that micro-atomizes the liquid droplets. The special design produces tiny and uniform droplets. Ultrasonic atomizers have two phases of atomization. Phase one: liquids mix with pressured air and produce tiny droplets to spray. Phase two: when the atomized droplets hit the ultrasonic generator, they get micro-atomized generating smaller droplets.

The content of the fluid to be applied in the applying step 120 may vary to obtain the desired antimicrobial properties. Generally, the metals that are being considered antimicrobial are typically within the transition metals of the d-block (V, Ti, Cr, Co, Ni, Cu, Zn, Tb, W, Ag, Cd, Au and Hg) and a few other metals and metalloids from groups 13-16 of the periodic table (Al, Ga, Ge, As, Se, Sn, Sb, Te, Pb and Bi). The most used antimicrobial metals are titanium (Ti), nickel (Ni), copper (Cu), zinc (Zn), silver (Ag), gold (Au) and aluminium (Al). The term "metal with antimicrobial properties" refers to any pure metal mentioned above, or their compounds or ions. The pure metal can be in a form of nanoparticles, for instance. In some embodiments, the metal may be submicron scale nanoparticles made of pure metals encapsulated in polymer or protected by a carbon shell.

In some embodiments, the fluid comprises at least one of silver compound, copper compound and zinc compound. The silver compound can be silver salt, and comprises at least one of silver chloride, silver sulphide, silver sulphate, silver nitrate, silver hydroxide, silver phosphate, silver carbonate and organometallic compounds of silver. The copper compound can be copper salt, and comprises at least one of copper chloride, copper sulphide, copper sulphate, copper nitride, copper nitrate, copper hydroxide, copper phosphate, copper phosphide, copper carbonate and organometallic compounds of copper. The zinc compound can be zinc salt, and comprises at least one of zinc chloride, zinc sulphate, zinc sulphide, zinc nitrate, zinc nitride, zinc hydroxide, zinc phosphate, zinc phosphide, zinc carbonate and organometallic compounds of zinc.

The fluid comprising the compound can be in an aqueous solution or an organic solvent depending on solubility of the metal compound. For example, silver nitrate is relatively soluble into distilled water but quite insoluble in alcohols. While anhydrous copper sulphate is soluble in water as well and insoluble in ethanol, copper sulphate pentahydrate dissolves quite well in methanol. Additionally, zinc chloride equally soluble in water, ethanol and acetone.

The concentration of the metal compound in the fluid is 0,1-2 kg/l in room temperature or 0,1-20 kg/l when the fluid is heated above the room temperature but below its boiling temperature. The concentration needed to produce the antimicrobial effect after the ion exchange depends on the applying time. The longer the applying time, the lower the concentration needed. For example, when applying silver nitrate, 0,1 kg/l at the rate of 1 l/h is sufficient concentration with the applying time of 60 seconds while the same silver nitrate concentration at 10 l/h feed rate can produce a similar impregnation with a 5 second application time. After the fluid comprising metal with antimicrobial properties is deposited on the surface, the aqueous solution or organic solvent in the fluid evaporates leaving only metal compound on the surface of the glass object, which transforms to metal ions. This applies when the solvent has not evaporated completely before contacting the surface of the glass object, but as disclosed earlier, in some embodiments the solvent is evaporated on the way from the nozzle and only metal compound contacts the surface.

After applying step 120 is followed by an annealing step 130. The annealing step 130 can be carried out in an annealing lehr or any other type of furnace to provide the initial temperature of 500-950 °C depending on the glass transition temperature (Tg) of the glass and followed by a controlled decrease closer to ambient temperature. The annealing prevents tensions from forming with simultaneous cooling of bulk and surface resulting in fewer internal stresses, which lowers brittleness and probability of breaking. The annealing time and temperature depend on the size and composition of the glass object. Therefore, the invention should not be limited by any particular annealing time or temperature. For example, a small marble needs virtually no controlled annealing while a tumbler of 1 cm thickness can be annealed in few hours and a complex art piece with the largest wall thickness of 10 cm can take a day or two to anneal properly.

Annealing enables an ion exchange reaction which is a chemical reaction between two substances. Each substance consists of positively and negatively charged species called ions that involves an exchange of one or more ionic components. The bigger metal ions i.e. electronically charged particles in the metal compound migrate into the glass surface, replacing the smaller ions originally in the glass. Depending on chemistry of the ions to be exchanged, the ion in the metal compound on the surface penetrates onto the glass surface. As the glass cools, the reaction rate decreases until there is no ion-exchange taking place. The cool down needs to be controlled in order to prevent the exchanged metal ions from penetrating the bulk but to stay on the surface exposed so that ion leeching can actively kill bacteria in the final product. The obtained metal ions can be even non-uniformly distributed and cover less than 100 % of the surface as long as the distance of islands, also known as domains, are at the same range as the size of bacteria cells to be effective. The obtained layer can be less than 10 nm thick which would appear transparent instead of yellow to human eyes in case of silver. However, if the obtained particle size exceeds 10 nm, the concentration of the particles is important since the faint yellow colour is not detectable by human eye when the islands are far apart. To have a full surface coverage and be sure that bacteria cells are always in contact with silver ions, the islands can be even 1 um apart since a typical bacteria cell is usually in the size range of 1-5 um.

After the annealing, the finished antimicrobial glass product is obtained, which is then followed by free cooling which refers to letting the glass object tool cool to the ambient temperature by itself without additional assistance. The ambient temperature may refer to room temperature. The glass object may be cooled in an open space outside the annealing furnace or in the furnace while the furnace is being cooled down together with the glass object.

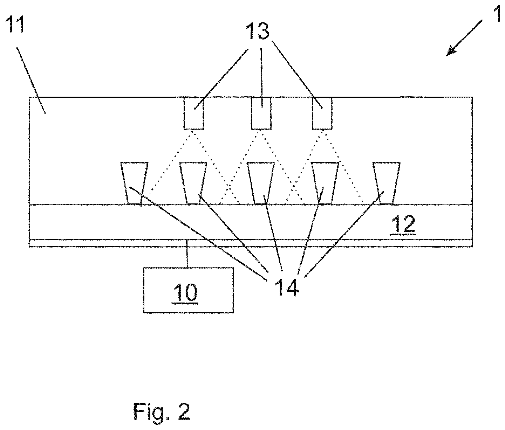

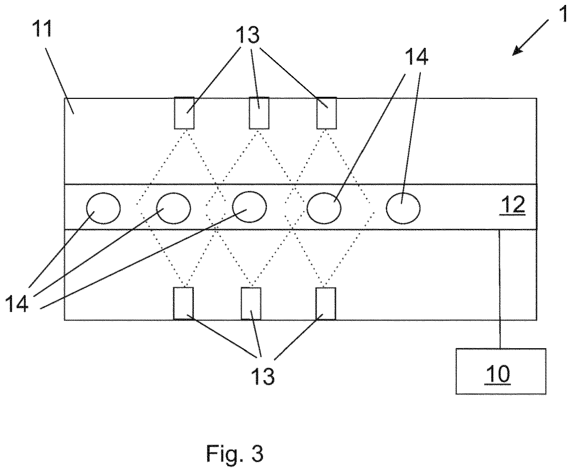

Figures 2 and 3 illustrate schematic views of a spray applying unit 1 of a glass manufacturing arrangement according to some embodiments. The arrangement comprises the spray applying unit 1 configured to apply fluid comprising metal with antimicrobial properties on a glass object 14. The glass object 14 illustrated in the Figures 2 and 3 can be a tumbler, for example. The spray applying unit 1 comprises a transportation unit 10 for transporting the glass object 14, a frame 11 and at least one nozzle 13 attached to the frame 11 configured to spray fluid comprising metal with antimicrobial properties on the glass object 14.

Fig. 2 shows a side view of the arrangement according to one embodiment, where the nozzles 13 are attached to the ceiling of the frame 11 and arranged to spray from above towards the glass object 14.

Fig. 3 shows a top view of the arrangement according to another embodiment, where the nozzles 13 are attached to sidewalls of the frame 11 and arranged to spray from sides towards the glass object 14. In some embodiments, the nozzles 13 can be attached to both ceiling and on the sidewalls of the frame 11.

The transportation unit 10 is arranged to transport the glass object 14 to and from the spray applying unit 1 or within the spray applying unit 1. It can be for instance a robot for grabbing the glass object or an actuator for moving a conveyor 12 with a belt or chain. The conveyor 12 can be within the frame 11 where the glass objects 14 are arranged to pass through. The conveyor 12 can further comprise rotatable platform on which the glass object 14 is placed. When the glass object 14 arrives next to the nozzle 13, the platform is arranged to rotate, and thus the glass object 14, around its central axis so that the side of the glass object 14 is sprayed uniformly.

The nozzles 13 are in a pressurized system or an ultrasonic vaporizer. The nozzle 13 is arranged to spray the fluid at a flow rate of 0,1 to 10 l/hour. A preferred spraying time is 5-60 seconds, most preferably 5-30 seconds. The pattern type for the nozzles 13 in Fig. 2 can be a full cone, and the pattern type for the nozzles 13 in Fig. 3 can be a flat fan. The applied fluid comprises at least one of silver compound, copper compound and zinc compound, and more preferably silver nitrate.

The arrangement for antimicrobial glass product further comprises a forming unit configured to form a glass object. The forming unit can be a machine-assisted or human-assisted and comprises at least a melting furnace for heating the glass batch to and above the melting temperature and a forming means to give a shape to the glass object. The forming means can be a mould or a blowpipe with manual forming or similar.

A flame polishing unit can be arranged after the glass forming unit and is configured to smooth the surface of the glass object. The flame-polishing unit comprises a flame polishing machine which produces a flame ranging 2400 - 3300 °C. This can be achieved, for instance, with a combination of oxygen and hydrogen gas and inputting it into a precision flame nozzle. However, in some embodiments, the flame-polishing unit is not necessary, or it is combined with the spray applying unit 1.

An annealing unit is arranged after the applying unit and it comprises an annealing lehr or furnace configured to controllably drop down the temperature of the surface of the glass object from slightly above Tg to ambient temperature. The annealing furnace can be electrically powered and comprise a conveyor belt and an inlet and an outlet. The time when the glass object passes from the inlet to the outlet defines the annealing time. The annealing furnace can also be a closable with one opening.

The metal compound, e.g. silver nitrate dissolves in a de-ionized water at 5 %-wt. When the glass objects comes from the flame polishing unit, the liquid comprising metal with antimicrobial properties is atomized by a pneumatized air in the nozzle 13 at the rate of 1 l/min and the metal compound is deposited on the surface of the rotating glass object 14. There can be six independent spray nozzles 13 (as shown in Fig. 3) in three consecutive stations, wherein one station contains one nozzle 13 one side and another nozzle 13 on the opposite side. The spray nozzles 13 are placed 10 cm from the surface of the glass object 14 so that the spray deposits all over the outer surface of the glass object 14. The glass object 14 is rotated by the rotatable platform around its center axis for 5 seconds in each station. After the deposition, the glass object 14 is placed on the annealing furnace. The annealing furnace temperature and residence time is adjusted so that the object can be annealed properly, depending on the wall thickness of the glass object 14.

In some embodiments, an additional cooling unit may be provided. The cooling unit can be a storage space to provide convective heat transfer from the glass object to reach ambient temperature. In some embodiments, the cooling unit and the annealing unit can be combined in a such way that glass object is cooled inside the annealing furnace as the furnace cools down.

The finished glass product has a thin antimicrobial layer which appears to be transparent to the human eye. The disclosed process is a lot faster and more cost-effective compared to the conventional process for manufacturing an antimicrobial glass product from molten glass.

## Claims

1. A method of manufacturing a glass product, comprising:
forming a glass object from molten glass (100),
applying fluid comprising metal with antimicrobial properties on the glass object having a surface temperature of 500-950 °C while the object is cooling after said forming (120), and
annealing the glass object after said applying (130) to obtain the finished antimicrobial glass product.

2. The method according to claim 1, wherein the method further comprises a step (110) of flame-polishing the surface of the glass object after the forming (100).

3. The method according to claim 1 or 2, wherein in the applying step (120) the applied fluid comprises at least one of silver, copper and zinc in a form of pure metal particles or its compound.

4. The method according to claim 3, wherein the silver compound comprises at least one of silver chloride, silver sulphide, silver sulphate, silver nitrate, silver hydroxide, silver phosphate, silver carbonate and organometallic compound of silver.

5. The method according to claim 3, wherein the copper compound comprises at least one of copper chloride, copper sulphide, copper sulphate, copper nitride, copper nitrate, copper hydroxide, copper phosphate, copper phosphide, copper carbonate and organometallic compound of copper.

6. The method according to claim 3, wherein the zinc compound comprises at least one of zinc chloride, zinc sulphate, zinc sulphide, zinc nitrate, zinc nitride, zinc hydroxide, zinc phosphate, zinc phosphide, zinc carbonate and organometallic compound of zinc.

7. The method according to claim 3-6, wherein compound concentration in the fluid is 0,1-2 kg/l in room temperature.

8. The method according to claim 3-7, wherein during the applying step (120) the metal compound is applied to the surface of the glass object by spraying from a nozzle.

9. The method according to claim 8, wherein during the spraying from the nozzle, droplet size is 10 nm to 10 µm when the droplet is deposited onto the surface of the glass object.

10. The method according to claim 8 or 9, wherein the nozzle is arranged to spray the fluid at a flow rate of 0,1 to 10 l/h.

11. A glass manufacturing arrangement, comprising
a forming unit,
an annealing unit,
a spray applying unit (1) arranged after the forming unit and before the annealing unit, and configured to apply fluid comprising metal with antimicrobial properties on a glass object (14), the spray applying unit (1) comprising
a transportation unit (10) for moving the glass object (14),
a frame (11), and
a nozzle (13) attached to the frame (11) configured to spray the metal with antimicrobial properties on the glass object (14).

12. The glass manufacturing arrangement according to claim 11, wherein the spray applying unit (1) further comprises a conveyor (12) movable by the transportation unit (10).

13. The glass manufacturing arrangement according to claim 12, wherein the conveyor (12) further comprises a rotatable platform on which the glass object (14) is placed.

14. The glass manufacturing arrangement according to any one of claims 11-13, wherein the nozzle (13) is in a pressurized system or an ultrasonic vaporizer.

15. The glass manufacturing arrangement according to any one of claims 11-14, wherein the fluid comprises at least one of silver, copper and zinc in a form of pure metal particles or its compound.

## Patentansprüche

1. Verfahren zur Herstellung eines Glasprodukts, umfassend:
Formen eines Glasobjekts aus Glasschmelze (100),
Aufbringen von Fluid, das Metall mit antimikrobiellen Eigenschaften umfasst, auf das Glasobjekt, das eine Oberflächentemperatur von 500 bis 950°C aufweist, während das Objekt nach dem Formen abkühlt (120), und
Tempern des Glasobjekts nach dem Aufbringen (130), um das fertige antimikrobielle Glasprodukt zu erhalten.

2. Verfahren nach Anspruch 1, wobei das Verfahren ferner einen Schritt (110) des Flammpolierens der Oberfläche des Glasobjekts nach dem Formen (100) umfasst.

3. Verfahren nach Anspruch 1 oder 2, wobei der Schritt des Aufbringens (120) des aufgebrachten Fluids mindestens eines von Silber, Kupfer und Zink in einer Form von reinen Metallpartikeln oder seiner Verbindung umfasst.

4. Verfahren nach Anspruch 3, wobei die Silberverbindung mindestens eines von Silberchlorid, Silbersulfid, Silbersulfat, Silbernitrat, Silberhydroxid, Silberphosphat, Silbercarbonat und metallorganischer Silberverbindung umfasst.

5. Verfahren nach Anspruch 3, wobei die Kupferverbindung mindestens eines von Kupferchlorid, Kupfersulfid, Kupfersulfat, Kupfernitrid, Kupfernitrat, Kupferhydroxid, Kupferphosphat, Kupferphosphid, Kupfercarbonat und metallorganischer Kupferverbindung umfasst.

6. Verfahren nach Anspruch 3, wobei die Zinkverbindung mindestens eines von Zinkchlorid, Zinksulfat, Zinksulfid, Zinknitrat, Zinknitrid, Zinkhydroxid, Zinkphosphat, Zinkphosphid, Zinkcarbonat und metallorganischer Zinkverbindung umfasst.

7. Verfahren nach Anspruch 3 bis 6, wobei die Verbindungskonzentration in dem Fluid 0,1 bis 2 kg/l in Raumtemperatur beträgt.

8. Verfahren nach Anspruch 3 bis 7, wobei während des Aufbringungsschritts (120) die Metallverbindung durch Sprühen von einer Düse auf der Oberfläche des Glasobjekts aufgebracht wird.

9. Verfahren nach Anspruch 8, wobei während des Sprühens von der Düse die Tröpfchengröße 10 nm bis 10 µm beträgt, wenn das Tröpfchen auf der Oberfläche des Glasobjekts abgeschieden wird.

10. Verfahren nach Anspruch 8 oder 9, wobei die Düse dazu eingerichtet ist, das Fluid bei einer Durchflussmenge von 0,1 bis 10 1/Std. zu sprühen.

11. Anordnung zur Herstellung von Glas, umfassend:
eine Formungseinheit,
eine Tempereinheit,
eine Sprühaufbringungseinheit (1), die nach der Formungseinheit und vor der Tempereinheit eingerichtet ist und dazu ausgestaltet ist, Fluid, das Metall mit antimikrobiellen Eigenschaften umfasst, auf ein Glasobjekt (14) aufzubringen, wobei die Sprühaufbringungseinheit (1) umfasst:
eine Transporteinheit (10) zum Bewegen des Glasobjekts (14),
einen Rahmen (11), und
eine Düse (13), die an dem Rahmen (11) angebracht ist und dazu ausgestaltet ist, das Metall mit antimikrobiellen Eigenschaften auf das Glasobjekt (14) zu sprühen.

12. Anordnung zur Herstellung von Glas nach Anspruch 11, wobei die Sprühaufbringungseinheit (1) ferner einen Förderer (12) umfasst, der durch die Transporteinheit (10) beweglich ist.

13. Anordnung zur Herstellung von Glas nach Anspruch 12, wobei der Förderer (12) ferner eine drehbare Plattform umfasst, auf der das Glasobjekt (14) platziert ist.

14. Anordnung zur Herstellung von Glas nach einem der Ansprüche 11 bis 13, wobei die Düse (13) sich in einem druckbeaufschlagten System oder einem Ultraschallzerstäuber befindet.

15. Anordnung zur Herstellung von Glas nach einem der Ansprüche 11 bis 14, wobei das Fluid mindestens eines von Silber, Kupfer und Zink in einer Form von reinen Metallpartikeln oder seiner Verbindung umfasst.

## Revendications

1. Procédé de fabrication d'un produit en verre, comprenant :
la formation d'un objet en verre à partir de verre fondu (100),
l'application d'un fluide comprenant un métal ayant des propriétés antimicrobiennes sur l'objet en verre ayant une température de surface de 500 à 950°C alors que l'objet est en cours de refroidissement après ladite formation (120), et
le recuit de l'objet en verre après ladite application (130) pour que soit obtenu le produit en verre antimicrobien fini.

2. Procédé selon la revendication 1, lequel procédé comprend en outre une étape (110) de polissage à la flamme de la surface de l'objet en verre après la formation (100).

3. Procédé selon la revendication 1 ou 2, dans lequel, dans l'étape d'application (120), le fluide appliqué comprend au moins l'un parmi l'argent, le cuivre et le zinc sous la forme de particules métalliques pures ou de son composé.

4. Procédé selon la revendication 3, dans lequel le composé de l'argent comprend au moins l'un parmi le chlorure d'argent, le sulfure d'argent, le sulfate d'argent, le nitrate d'argent, l'hydroxyde d'argent, le phosphate d'argent, le carbonate d'argent et un composé organométallique de l'argent.

5. Procédé selon la revendication 3, dans lequel le composé du cuivre comprend au moins l'un parmi le chlorure de cuivre, le sulfure de cuivre, le sulfate de cuivre, le nitrure de cuivre, le nitrate de cuivre, l'hydroxyde de cuivre, le phosphate de cuivre, le phosphure de cuivre, le carbonate de cuivre et un composé organométallique du cuivre.

6. Procédé selon la revendication 3, dans lequel le composé du zinc comprend au moins l'un parmi le chlorure de zinc, le sulfate de zinc, le sulfure de zinc, le nitrate de zinc, le nitrure de zinc, l'hydroxyde de zinc, le phosphate de zinc, le phosphure de zinc, le carbonate de zinc et un composé organométallique du zinc.

7. Procédé selon les revendications 3 à 6, dans lequel la concentration du composé dans le fluide est de 0,1 à 2 kg/l à la température ambiante.

8. Procédé selon les revendications 3 à 7, dans lequel, durant l'étape d'application (120), le composé métallique est appliqué à la surface de l'objet en verre par pulvérisation depuis une buse.

9. Procédé selon la revendication 8, dans lequel, durant la pulvérisation depuis une buse, la taille de gouttelette est de 10 nm à 10 µm quand la gouttelette est déposée sur la surface de l'objet en verre.

10. Procédé selon la revendication 8 ou 9, dans lequel la buse est disposée de manière à pulvériser le fluide à un débit de 0,1 à 10 l/h.

11. Agencement de fabrication de verre, comprenant
une unité de formation,
une unité de recuit,
une unité d'application de pulvérisation (1) disposée après l'unité de formation et avant l'unité de recuit, et configurée pour appliquer un fluide comprenant un métal ayant des propriétés antimicrobiennes sur un objet en verre (14), l'unité d'application de pulvérisation (1) comprenant
une unité de transport (10) pour déplacer l'objet en verre (14),
un bâti (11) et
une buse (13) attachée au bâti (11) et configurée pour pulvériser le métal ayant des propriétés antimicrobiennes sur l'objet en verre (14).

12. Agencement de fabrication de verre selon la revendication 11, dans lequel l'unité d'application de pulvérisation (1) comprend en outre un convoyeur (12) pouvant être déplacé par l'unité de transport (10).

13. Agencement de fabrication de verre selon la revendication 12, dans lequel le convoyeur (12) comprend en outre une plateforme rotative sur laquelle l'objet en verre (14) est placé.

14. Agencement de fabrication de verre selon l'une quelconque des revendications 11 à 13, dans lequel la buse (13) est dans un système pressurisé ou un vaporiseur ultrasonique.

15. Agencement de fabrication de verre selon l'une quelconque des revendications 11 à 14, dans lequel le fluide comprend au moins l'un parmi l'argent, le cuivre et le zinc sous la forme de particules métalliques pures ou de son composé.
